# EUROPÄISCHE PATENTANMELDUNG

(11) **EP 4 216 389 A1**
(43) Veröffentlichungstag der Anmeldung: **26.07.2023**
(21) Anmeldenummer: 22153003.3
(22) Anmeldetag: 24.01.2022
(51) Int. Cl.: H02J 1/08, H02M 7/00

(54) **SCHALTNETZTEIL MIT ZWEI LEISTUNGSAUSGÄNGEN**

(71) Anmelder: Murrelektronik GmbH, 71570 Oppenweiler (DE)
(72) Erfinder: Gradischnig, Robert, 8472 Grassnitzberg (AT); Hiltunen, Jani, 05400 Jokela (FI)
(74) Vertreter: Karzel, Philipp

(57) **Zusammenfassung**

Die Erfindung betrifft ein Schaltnetzteil insbesondere zur Verwendung in einer intralogistischen Anlage (9) für Waren (6). Das Schaltnetzteil (30) hat ein Gehäuse (31) mit einen ersten Leistungsausgang (1) mit einer ersten Betriebsspannung (U1) für erste elektrische Verbraucher (7). Nach der Erfindung ist vorgesehen, dass das Gehäuse (31) des Schaltnetzteils (30) zumindest einen zweiten Leistungsausgang (2) mit einer zweiten Betriebsspannung (U2) für zweite elektrische Verbraucher (8) aufweist, und die zweite Betriebsspannung (U2) am zweiten Leistungsausgang (2) größer ist als die erste Betriebsspannung (U1) an dem ersten Leistungsausgang (1).

## Beschreibung

Die Erfindung betrifft ein Schaltnetzteil mit einem geschlossenen Gehäuse und einem ersten Leistungsausgang mit einer ersten Betriebsspannung für erste elektrische Verbraucher.

Ein Schaltnetzteil besteht aus einer elektronischen Baugruppe, die eine unstabilisierte Eingangsspannung in eine konstante Ausgangsspannung (Gleichspannung) umwandelt. Die Netzspannung wird gleichgerichtet und über einen elektronischen Schalter in eine höhere Frequenz der Spannung zerhackt und über einen Zwischenkreis auf eine gewünschte Ausgangsspannung gleichgerichtet. Eine meist vorgesehene galvanische Trennung zwischen der Netzspannung und der Ausgangsspannung erfolgt zweckmäßig über einen Leistungsübertrager in Form eines Transformators. Das Schaltnetzteil stellt eine stabilisierte Ausgangsspannung zum Betrieb von Verbrauchern zur Verfügung.

In der Intralogistik von logistischen Material- und Warenflüssen auf Förderbahnen kommen zum Beispiel Rollenförderer, Gurtförderer oder dergleichen Fördervorrichtungen zum Einsatz. Eine Anlage der Intralogistik besteht in der Regel aus einer Vielzahl an hintereinander angeordneten Rollenförderern. Bei einem Rollenförderer liegen eine Vielzahl von Förderrollen nebeneinander, von denen zumindest eine Förderrolle von einem Elektromotor angetrieben ist. Ein antreibender Elektromotor kann in einer Förderrolle integriert oder auch als externer Elektromotor vorgesehen sein. Bei einem Gurtförderer läuft ein endloses Transportband über eine Antriebsrolle, die über einen integrierten Elektromotor oder über einen externen Elektromotor angetrieben ist.

Die Anlagen der Intralogistik haben eine hohe räumliche Ausdehnung und sind mit einer Vielzahl von Sensoren (z. B. Lichtschranken, Reedkontakte, mechanische Kontakte oder dgl.) sowie einer Vielzahl von Aktoren (z. B. Elektromotoren, Elektromagnete, Anzeigevorrichtungen oder dgl.) versehen. Einzelne Aktoren können eine hohe elektrische Leistungsaufnahme aufweisen. Gerade zur Förderung schwerer Waren, Werkstücke oder schweren Materials müssen die Elektromotoren eine ausreichende Antriebsleistung zur Verfügung stellen.

Alle Aktoren und Sensoren werden standardmäßig mit einer gleichen Versorgungsspannung betrieben. In der Intralogistik ist für alle Aktoren und Sensoren meist eine Gleichspannung von 24 V verwendet, wobei eine hohe Leistungsaufnahme der verwendeten Elektromotoren entsprechend hohe Ströme bewirken, was eine angepasste Dimensionierung und Verlegung der elektrischen Verkabelung notwendig macht.

Der Erfindung liegt die Aufgabe zugrunde, bei geringem Investitionsaufwand die Energieversorgung einer bestehenden Anlage der Intralogistik derart auszubilden, dass bei optimierter Stromaufnahme von Aktoren wie z. B. antreibenden Elektromotoren eine weitere Verwendung von Standardsensoren möglich ist.

Die Aufgabe wird gelöst durch ein Schaltnetzteil mit einem geschlossenen Gehäuse, welches einen ersten Leistungsausgang mit einer ersten Betriebsspannung für erste elektrische Verbraucher und zumindest einen zweiten Leistungsausgang mit einer zweiten Betriebsspannung für zweite elektrische Verbraucher aufweist. Die zweite Betriebsspannung für zweite elektrische Verbraucher ist größer als die erste Betriebsspannung an dem ersten Leistungsausgang des Schaltnetzteils.

Ein derart ausgebildetes Schaltnetzteil mit zumindest zwei Leistungsausgängen mit zwei unterschiedlichen Betriebsspannungen gibt dem Benutzer die Möglichkeit, bei bestehenden Anlagen der Intralogistik ein bestehendes Netzteil mit z. B. 24 V Nennspannung gegen ein erfindungsgemäßes Schaltnetzteil mit einer ersten Betriebsspannung von z. B. 24 V und einer zweiten Betriebsspannung von z. B. 36 V oder 48 V auszutauschen. Erste Verbraucher mit geringer Leistungsaufnahme wie zum Beispiel Sensoren oder dgl. können über elektrische Leitungen mit dem ersten Leistungsausgang des Schaltnetzteils verbunden bleiben um mit der ursprünglichen Betriebsspannung von z. B. 24 V an dem erfindungsgemäßen Schaltnetzteil weiterbetrieben zu werden, ohne dass Änderungen an der Installation der Anlage vorgenommen werden müssen. Zweite Verbraucher der Anlage mit höherer Leistungsaufnahme wie zum Beispiel antreibende Elektromotoren oder dgl. können getrennt vom Netz der ursprünglichen Betriebsspannung zur Leistungsversorgung mit dem zweiten Leistungsausgang mit der zweiten Betriebsspannung verbunden werden, um mit der höheren zweiten Betriebsspannung des erfindungsgemäßen Schaltnetzteils betrieben zu werden. Trotz einer erhöhten Leistungsaufnahme eines Elektromotors kann dieser bei unveränderter oder ergänzter Verkabelung an dem zweiten Leistungsausgang des erfindungsgemäßen Schaltnetzteils grundsätzlich mit der höheren zweiten Betriebsspannung betrieben werden. Es kann zweckmäßig sein, bestehende Elektromotoren gegen Elektromotoren mit einer höheren Nennspannung auszutauschen.

Es kann vorteilhaft sein, dass die zweite Betriebsspannung ein Vielfaches, insbesondere ein ganzzahliges Vielfaches der ersten Betriebsspannung ist. So kann die erste Betriebsspannung einen Nennwert von 24 V und die zweite Betriebsspannung einen Nennwert von 48 V aufweisen. Auch andere Verhältnisse als ganzzahlige Verhältnisse der Betriebsspannungen zueinander können zweckmäßig sein.

Vorteilhaft ist im Gehäuse des Schaltnetzteils ein Regelglied angeordnet ist. Das Regelglied ist ausgebildet, zumindest eine der Betriebsspannungen eines Leistungsausgangs des Schaltnetzteils zu verändern. Dies kann vorteilhaft sein, um die Nennspannung am Leistungsausgang nach zu regeln, wenn z. B. bei erhöhter Leistungsanforderung die zur Verfügung gestellte zweite Betriebsspannung abzusinken droht.

In Weiterbildung der Erfindung ist vorgesehen, im Gehäuse des Schaltnetzteils eine elektronische Sicherung vorzusehen, die ausgebildet ist, zumindest einen Leistungsausgang des Schaltnetzteils elektrisch abzusichern. Vorteilhaft ist der elektronischen Sicherung ein Grenzwert eingegeben, wobei die elektronische Sicherung ausgebildet ist, bei Überschreiten des eingegebenen Grenzwertes die auf dem überwachten Leistungsausgang ausgegebene elektrische Leistung abzusenken. Insbesondere ist vorgesehen, bei Überschreiten des eingegebenen Grenzwertes den Leistungsausgang abzuschalten.

In zweckmäßiger Weiterbildung der Erfindung ist vorgesehen, die elektronische Sicherung derart auszubilden, dass bei Überschreiten des eingegebenen Grenzwertes die auf dem überwachten Leistungsausgang ausgegebene elektrische Leistung nach einer einstellbaren Betriebscharakteristik zu überwachen. Dabei kann es zweckmäßig sein, den fließenden Strom nach einer vorgebbaren Betriebscharakteristik auf einen Maximalwert zu begrenzen. Auch kann der Strom vorteilhaft, z.B. durch Pulsweitenmodulation, auf einen vorgegebenen Mittelwert über der Zeit eingestellt werden. In einer einfachen Ausführungsform ist die Betriebscharakteristik derart gewählt, dass bei Überschreiten eines Grenzwertes der Strompfad geöffnet wird, der fließende Strom also abgeschaltet wird.

Zur optischen Überwachung des Schaltnetzteils kann es vorteilhaft sein, im Gehäuse des Schaltnetzteils eine von außen ablesbare Anzeigevorrichtung vorzusehen, die geeignet ist, den Zustand zumindest eines Leistungsausgangs anzuzeigen.

In Anlagen und Systemen der Intralogistik wird der Warenfluss beschleunigt, gebremst oder von einer ersten Ebene auf eine zweite Ebene angehoben oder abgesenkt. Die beim Abbremsen oder Absenken des Fördergutes auf ein niedrigeres Lageniveau anfallende Energie treibt den Elektromotor in der Förderbahn an, so dass dieser als Generator arbeitet und einen Generatorstrom in das System einspeist. Um den Generatorstrom abzubauen, ist im Gehäuse des Schaltnetzteils vorteilhaft zumindest ein Bremswiderstand angeordnet.

In zweckmäßiger Weiterbildung der Erfindung ist vorgesehen, das Schaltnetzteil derart auszubilden, dass ein dem Schaltnetzteil über einen der Leistungsausgänge zufließender Strom zur Leistungsversorgung eines anderen Leistungsausgang des Schaltnetzteils genutzt wird, insbesondere auf den Leistungsausgang aufzuschalten. Vorteilhaft kann die dem Schaltnetzteil zufließende elektrische Energie des Generatorstroms auch in einem Zwischenspeicher gespeichert werden. Aus dem Zwischenspeicher kann mit der gespeicherten Energie der eine oder der andere Leistungsausgang gespeist werden. Die Gesamtanlage kann so energiesparsam betrieben werden.

In besondere Weiterbildung des erfindungsgemäßen Schaltnetzteils ist im Gehäuse des Schaltnetzteils eine Kommunikationseinheit aufgenommen. Die Kommunikationseinheit ist ausgebildet, Betriebsdaten zumindest eines Leistungsausgangs, vorzugsweise beider oder aller Leistungsausgänge des Schaltnetzteils wie Strom, Spannung, Leistung, Temperatur o. dgl. einer insbesondere übergeordneten zentralen Steuerung zu übermitteln, insbesondere diese Daten nach außerhalb des Schaltnetzteils oder der Anlage zu kommunizieren. Vorteilhaft erfolgt dies über eine geeignete Kommunikationsschnittstelle oder einen geeigneten Kommunikationsbus. Als Kommunikationsschnittstelle kann IO-Link, RS-232 oder auch USB zur Anwendung kommen.

Insbesondere ist vorgesehen, die Kommunikationseinheit derart auszubilden, dass Betriebsdaten des Schaltnetzteils wie Strom, Spannung, Leistung oder dgl. durch einen äußeren Eingriff über die Kommunikationseinheit zu verändern sind.

Vorzugsweise ist die Kommunikationseinheit derart ausgebildet, dass sie im Kommunikationsbus als Slave und/oder als Master zu betreiben ist.

Die Merkmale der Erfindung ergeben sich aus den Ansprüchen, der Beschreibung und der Zeichnung, in der beispielhaft ein Ausführungsbeispiel der Erfindung dargestellt ist. Die offenbarten Merkmale sind unabhängig von dem Rückbezug und der Reihenfolge der Ansprüche untereinander kombinierbar ohne den Grundgedanken der Erfindung zu verlassen. Das in der Zeichnung dargestellte Ausführungsbeispiel wird mit den Merkmalen der Erfindung nachfolgend beschrieben. Es zeigen:
- Fig. 1: in schematischer Darstellung eine Anlage der Intralogistik mit einer beispielhaften Förderbahn aus Gurtförderern,
- Fig. 2: in schematischer Darstellung ein Blockschaltbild eines erfindungsgemäßen Schaltnetzteils.

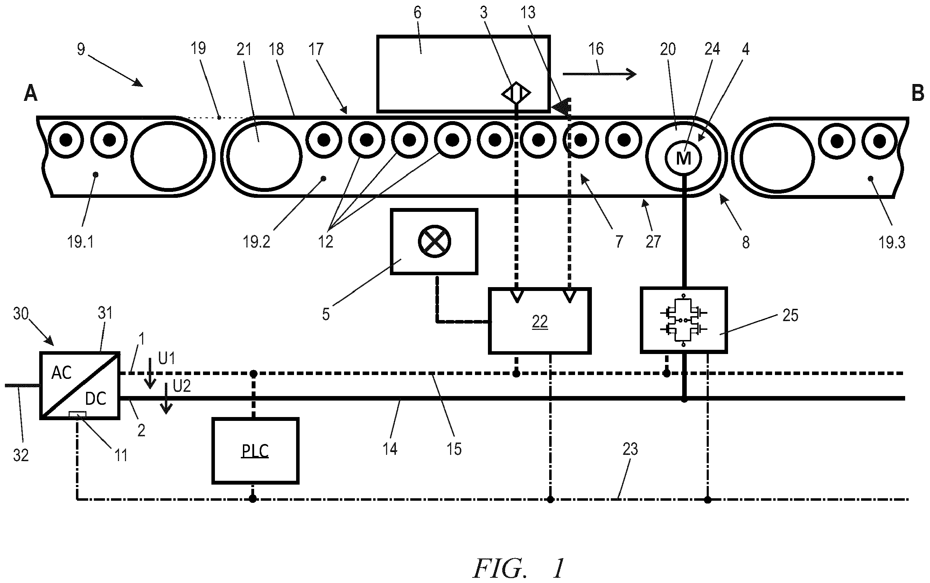

Das Ausführungsbeispiel nach Fig. 1 zeigt schematisch eine Anlage 9 der Intralogistik. Schematisch ist eine Förderbahn 19 dargestellt, die im gezeigten Ausführungsbeispiel aus in Förderrichtung 16 hintereinander angeordneten Gurtförderern 19.1 bis 19.3 zusammengesetzt ist. Die in Fig. 1 gezeigten Gurtförderer 19.1, 19.2, 19.3 sind vorteilhaft gleich ausgebildet. Anstelle oder in Kombination mit den gezeigten Gurtförderern 19.1 bis 19.3 können auch Rollenförderer oder dergleichen Fördervorrichtungen eingesetzt werden.

Am Beispiel des Gurtförderers 19.2 ist der grundsätzliche Aufbau eines Gurtförderers beschrieben. Ein Gurtförderer 19.2 besteht im Wesentlichen aus einem endlosen Transportband 18, dessen Lasttrum 17 zur Abtragung einer Gewichtslast über mehrere in Förderrichtung 16 nebeneinander liegende Stützrollen 12 abgestützt ist. Das Transportband 18 wird von einer Antriebsrolle 20 angetrieben, die von einem als Elektromotor 24 ausgebildeten Aktor 4 angetrieben ist. Über eine weitere Umlenkrolle 21 geht das Transportband 18 von dem Leertrum 27 in den Lasttrum 17 über. Das Transportband 18 umschlingt endlos die Antriebsrolle 20 und die Umlenkrolle 21.

Auf der Förderbahn 19 wird eine Ware 6 wie z. B. Material, Stückgut oder dgl. von A nach B transportiert. Zur Kontrolle des Warenflusses sind Sensoren 3, 13 und Aktoren 4 vorgesehen. Im gezeigten Ausführungsbeispiel ist zum Beispiel als Sensor 3 eine Lichtschranke zur Erfassung der Anwesenheit und/oder der Position einer Ware 6 auf dem Transportband 18 vorgesehen. Ergänzend oder alternativ kann auch ein mechanischer Sensor 13 in Form eines mechanischen elektrischen Kontaktes die Position der Ware 6 auf der Förderbahn 19 erfassen. Über ein Schnittstellenmodul 22 ist der Sensor 3 und/oder der Sensor 13 an einen Kommunikationsbus 23 angebunden, sodass deren Ausgangssignale einer zentralen Steuerung PLC zur Verfügung stehen. Die zentrale Steuerung kann eine vor Ort vorgesehene Steuerung, z. B. ein PC sein. Auch kann die Steuerung über eine Cloud o. dgl. erfolgen.

Das Schnittstellenmodul 22 kann ergänzend mit einer Anzeigevorrichtung 5 versehen sein, über die ein Ansprechen des als Lichtschranke ausgebildeten Sensors 3 oder den als elektrischer Kontakt ausgebildeten Sensors 13 optisch angezeigt wird.

Der die Förderbahn 19, im Ausführungsbeispiel die Antriebsrolle 20 des Transportbandes 18 des Gurtförderers 19.2 antreibende Elektromotor 24 bildet einen Aktor 4 der intralogistischen Anlage 9. Der Elektromotor 24 ist über eine Motorsteuerung 25 von der zentralen Steuerung PLC über den Kommunikationsbus 23 anzusteuern.

Zur elektrischen Leistungsversorgung der Anlage 9 ist ein Schaltnetzteil 30 vorgesehen, welches in einem insbesondere geschlossenen Gehäuse 31 angeordnet ist. Das Schaltnetzteil 30 weist einen Eingang 32 für eine Netzspannung von z. B. 230 V auf. Das Schaltnetzteil 30 hat einen ersten Leistungsausgang 1 mit einer ersten Betriebsspannung U1 und einen zweiten Leistungsausgang 2 mit einer zweiten Betriebsspannung U2. Die Betriebsspannung U2 am zweiten Leistungsausgang 2 ist größer als die Betriebsspannung U1 am ersten Leistungsausgang. Es kann auch zweckmäßig sein, die Betriebsspannung U1 größer als die Betriebsspannung U2 auszubilden. In Ausgestaltung der Erfindung weist das Schaltnetzteil 30 zumindest zwei Leistungsausgänge 1 und 2 auf. Das Schaltnetzteil 30 kann auch mehr, z. B. drei, vier oder mehr Leistungsausgänge aufweisen, wie in Fig. 1 strichliert angedeutet. Die Leistungsausgänge können mit gleich großen oder mit unterschiedlich großen Betriebsspannungen ausgelegt werden.

Das Schaltnetzteil 30 ist insbesondere zur Verwendung in Förderanlagen oder Fertigungsanlagen vorgesehen, in denen eine Mehrzahl von Sensoren 3, 13 und Aktoren 4, insbesondere Elektromotoren 24 vorgesehen sind. Da als Elektromotoren 24 vorgesehene Aktoren 4 einen signifikant höheren Leistungsbedarf haben als Sensoren 3, 13, ist vorgesehen, dass der erste Leistungsausgang 1 mit der insbesondere niedrigeren Betriebsspannung U1 insbesondere Sensoren 3, 13 als erste elektrische Verbraucher 7 speisen. Der zweite Leistungsausgang 2 mit der höheren Betriebsspannung U2 ist zur elektrischen Versorgung von Aktoren 4 mit einem höheren Leistungsbedarf vorgesehen, die zweite Verbraucher 8 insbesondere der Förder- oder Fertigungsanlage bilden. Aufgrund der gegenüber der Betriebsspannung U1 erhöhten Betriebsspannung U2 kann bei gleichem Strom eine erhöhte elektrische Leistung für Aktoren 4 bereitgestellt werden. Das erfindungsgemäße Schaltnetzteil 30 dient somit zur Leistungsversorgung verteilt angeordneter Verbraucher aus Sensoren 3, 13 und/oder Aktoren 4 in insbesondere einer intralogistischen Anlage 9 zur Beförderung von Material und oder Waren 6 auf einem Förderband 19. Hierzu sind, wie Fig. 1 zeigt, erste Verbraucher 7 mit einem niedrigen Leistungsbedarf, z. B. Sensoren 3, 13 über eine erste elektrische Leitung 15 mit dem ersten Leistungsausgang 1 des Schaltnetzteils 30 verbunden. Aktoren 4, z. B. antreibenden Elektromotoren 24, mit einem höheren elektrischen Leistungsbedarf sind über elektrische Leitungen 14 mit dem zweiten Leistungsausgang 2 des Schaltnetzteils 30 verbunden.

Die Betriebsspannungen U1 und U2 der Leistungsausgänge 1 und 2 sind derart ausgelegt, dass die zweite Betriebsspannung U2 ein Vielfaches der ersten Betriebsspannung U1 ist. Das Vielfache kann insbesondere ein ganzzahliges Vielfaches sein. Im gezeigten Ausführungsbeispiel hat die erste Betriebsspannung U1 einen Nennwert von 24 V; die zweite Betriebsspannung U2 hat mit 48 V einen Nennwert, der doppelt so groß wie die erste Betriebsspannung U1.

In Fig. 1 ist der Leistungsausgang 1 des Schaltnetzteils 30 strichliert wiedergegeben. Der Leistungsausgang 2 des Schaltnetzteils 30 ist mit durchgezogener Linie angegeben. Der Kommunikationsbus 23 zum Empfand der Sensorsignale und/oder zum Datenaustausch und insbesondere zur Steuerung der Aktoren 4 ist strichpunktiert eingezeichnet. Anstelle eines Kommunikationsbusses 23 kann auch ein IO-Link, RS-232 oder USB Verbindung als Kommunikationsschnittstelle vorgesehen sein. Ein IO-Link-System besteht aus einem IO-Link-Master und einem oder mehreren IO-Link Sensoren oder Aktoren. Der IO-Link-Master stellt die Schnittstelle zu einer überlagerten Steuerung PLC zur Verfügung und steuert die Kommunikation mit den angeschlossenen IO-Link-Geräten. RS-232 (Recommended Standard 232) ist ein Standard für eine serielle Schnittstelle. USB ist ein Universal Serial Bus (USB).

Wie in Fig. 1 gezeigt, ist die zentrale Steuerung PLC wie auch die Motorsteuerung 25 des als Elektromotor 24 ausgebildeten Aktors 4 und das Schnittstellenmodul 22 zur Kommunikation der Sensoren 3 und 13 mit dem Kommunikationsbus 23 an den ersten Leistungsausgang 1 angeschlossen, da diese Bauteile einen nur geringen Leistungsbedarf haben. Lediglich die von der Motorsteuerung 25 betriebene Steuerung ist über Leitungen 15 mit dem zweiten Leistungsausgang 2 des Schaltnetzteils 30 verbunden. Aufgrund der höheren Betriebsspannung U2 mit einem Nennwert von zum Beispiel 48 V sinkt bei gleicher Leistungsaufnahme wie bei einem Betrieb an 24 V die Stromstärke in der zuführenden elektrischen Leitung 14 ab, in diesem Beispiel um die Hälfte ab. Unter Verwendung der für eine Nennspannung von 24 V verlegten Leitungen 14 kann der Elektromotor 24 mit einer höheren elektrischen Leistung bei gleichem Leitungsquerschnitt der Leitungen 14 betrieben werden.

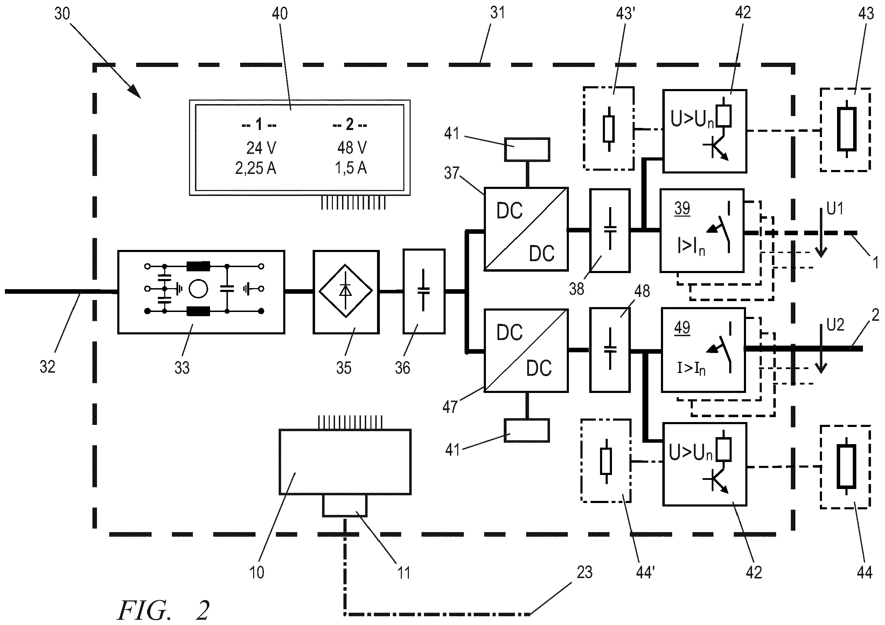

In Fig. 2 ist ein Blockschaltbild eines erfindungsgemäßen Schaltnetzteils 30 wiedergegeben. Das Schaltnetzteil 30 ist in einem insbesondere geschlossenen Gehäuse 31 angeordnet. Das Gehäuse 31 weist einen Eingang 32 zum Anlegen einer Netzspannung von z. B. 230 V auf. Die am Eingang 32 meist als AC vorliegende Netzspannung von z. B. 230V wird über einen Gleichrichter 35 und den Siebkondensator 36 zu einer Gleichspannung DC gewandelt. In den nachgeordneten DC/DC Wandlern 37 bzw.47 wird die Gleichspannung zerhackt und über die DC/DC Wandler 37 bzw. 47 der Niederspanungsseite von z. B. 24V und 48V zugeführt. Die durch das Schalten der DC/DC Wandler 37 und 47 entstehenden Störungen werden durch den Netzfilter 33 gedämpft.

Auf der Niederspannungsseite wird die geregelte DC Spannung der DC/DC Wandler 37 und 47 einem Zwischenkreiskondensator 38 bzw. 48 zugeführt. Über eine Sicherung 39, 49, die insbesondere als elektronische Sicherung ausgebildet ist, wird der jeweilige Leistungsausgang 1 bzw. 2 mit den über die DC/DC Wandler auf der Niederspannungsseite eingestellten Nennspannungen U1 von z.B. 24V und U2 von z. B. 48V betrieben.

Vorteilhaft ist in dem Gehäuse 31 des Schaltnetzteils 30 eine Anzeigevorrichtung 40 vorgesehen, die geeignet ist, den Zustand eines Leistungsausgangs 1 und/oder 2 anzuzeigen. So kann an der Anzeigevorrichtung 40 die an dem Leistungsausgang 1 und/oder 2 bereitgestellte Betriebsspannung als Nennwert und/oder ein auf dem Leistungsausgang 1 und/oder 2 aktuell fließender Strom angezeigt und von einem Benutzer abgelesen werden.

Zur Stabilisierung der an den Leistungsausgang 1 und/oder 2 bereitgestellten Betriebsspannungen U1 und U2 kann ein Regelglied 41 vorgesehen sein, welches die Nennspannung an den Leistungsausgang 1 und/oder 2 überwacht und bei Bedarf nachregelt. Das Regelglied 41 kommuniziert mit einer im Gehäuse 31 des Schaltnetzteils 30 vorgesehenen Kommunikationseinheit 10, über die externe Eingriffe von einem Benutzer oder einer Steuerung möglich sind. Die Kommunikationseinheit 10 ist mit einer Kommunikationsschnittstelle oder mit einem Kommunikationsbus 23 verbunden und dazu ausgebildet, Betriebsdaten zumindest eines Leistungsausgangs 1 und/oder 2 des Schaltnetzteils 30 nach außen zu kommunizieren. Hierzu ist - wie in Fig. 2 an der Kommunikationseinheit 10 angedeutet - eine Erfassung des Stroms eines Leistungsausgangs, der Spannung eines Leistungsausgangs, der abgegebenen Leistung eines Leistungsausgangs, der Temperatur verschiedener Bauteile des Schaltnetzteils, der Zustand einer Sicherung 39, 49 oder dergleichen vorgesehen. Über die Kommunikationseinheit 10 und eine daran angeschlossene Kommunikationsschnittstelle oder einen daran angeschlossenen Kommunikationsbus 23 sind von außen auch Eingriffe in das Schaltnetzteil 30 möglich. Hierzu weist die Kommunikationseinheit 10 eine Schnittstelle 11 für den Kommunikationsbus 23 auf. Die Kommunikationseinheit 10 ist so ausgebildet, dass sie im Kommunikationsbus sowohl als Slave und/oder als Master betrieben werden kann. Die Ausbildung der Kommunikationseinheit 10 ist so getroffen, dass über die Kommunikationseinheit 10 Betriebsdaten des Schaltnetzteils 30 zwischen Strom, Spannung, Leistung oder dergleichen verändert werden können.

Jeder Sicherung 39, 49 ist ein Grenzwert für einen maximalen Betriebsstrom Iₙ vorgegeben. In einer einfachen Ausbildung der Sicherung 39, 49 ist vorgesehen, dass bei Überschreiten des Betriebsstroms I über den vorgegebenen Grenzwert für den maximalen Betriebsstrom Iₙ die Sicherung 39, 49 den entsprechenden Leistungsausgang 1 oder 2 abschaltet. Die Sicherung 39, 49 kann auch derart als elektronische Sicherung ausgebildet sein, dass sie bei Überschreiten des eingegebenen Grenzwertes für den maximalen Betriebsstrom Iₙ die auf dem überwachten Leistungsausgang 1 oder 2 ausgegebenen elektrischen Strom absenkt. Auch ist es möglich, bei Ausbildung als elektronischer Sicherung 39, 49 eine Betriebscharakteristik vorzusehen, um bei Überschreiten des Grenzwertes für den maximalen Betriebsstrom Iₙ den elektrischen Strom des jeweiligen Leistungsausgangs 1 oder 2 zu beeinflussen, insbesondere abzuschalten. Die Ausbildung als elektronische Sicherung hat darüber hinaus den Vorteil, dass bei einem Abfall des aktuellen Betriebsstroms I unter den Grenzwert für den maximalen Betriebsstrom Iₙ eine insbesondere selbständige Wiederinbetriebnahme des Leistungsausgangs 1 oder 2 vorgesehen sein kann. Es kann zweckmäßig sein, nach Abschalten des Stroms die elektronische Sicherung nach Ablauf einer vorgebbaren Zeitdauer wieder einzuschalten. Steigt der Strom erneut über den Grenzwert an, wird wieder ausgeschaltet.

Wird der Elektromotor 24 zur Verringerung der Geschwindigkeit der Ware 6 in Förderrichtung 16 in der Drehzahl gedrosselt, kann die kinetische Energie der auf der Förderbahn 19 transportierten Ware einen antreibenden Einfluss auf den Elektromotor 24 haben, sodass dieser kurzzeitig als Generator arbeitet. Dies kann zu einer erhöhten Spannung auf dem Leistungsausgang 1 oder 2 führen und wird durch eine Überwachungsschaltung 42 erfasst. Übersteigt die aktuelle Betriebsspannung U den vorgesehenen Nennwert Uₙ der auf dem Leistungsausgang 1 oder 2 auszugebenden Nennspannung, wird ein Bremswiderstand 43 bzw. 44 zugeschaltet, über den die zugeführte Leistung abgebaut wird. Die Betriebsspannungen U1 und U2 werden konstant gehalten. Im Ausführungsbeispiel nach Fig. 2 sind die Bremswiderstände 43' und 44' innerhalb des Gehäuses 31 des Schaltnetzteils 30 angeordnet. Bei einer zu erwartenden hohen Leistung aus generatorischen Betriebszuständen eines Aktors 4 bzw. eines Elektromotors 24 kann es zweckmäßig sein, die Bremswiderstände 43 und 44 außerhalb des Gehäuses 31 des Schaltnetzteils 30 vorzusehen.

Anstelle einer Umwandlung der beim Abbremsen anfallenden generatorischen Energie über einen Bremswiderstand 43, 44 bzw. 43', 44' in Wärme kann es zweckmäßig sein, eine dem Schaltnetzteil 30 über einen der Leistungsausgänge 1 und/oder 2 zufließende elektrische Energie zur Leistungsversorgung eines Leistungsausgangs 1 und/oder 2 an über den dem Leistungsausgang zugeordneten Zwischenkreiskondensator 38 bzw. 48 zu nutzen.

Es kann auch zweckmäßig sein, eine dem Schaltnetzteil 30 über einen Leistungsausgang 1 bzw. 2 zufließende elektrische Energie z. B. von einen Zwischenkreiskondensator 38 des einen Leistungsausgangs 1 zum jeweils anderen Zwischenkreiskondensator 48 des anderen Leistungsausgangs 2 zu übertragen.

In vorteilhafter Weise ist das Gehäuse 31 des Schaltnetzteils 30 derart ausgebildet, dass es zum werkzeuglosen montieren oder demontieren auf zum Beispiel einer Hutschiene in einem Schaltschrank geeignet ist. Auch Schraubbefestigungen des Gehäuses 31 an einem Träger können zweckmäßig sein.

## Patentansprüche

1. Schaltnetzteil mit einem Gehäuse (31), wobei das Gehäuse (31) einen ersten Leistungsausgang (1) mit einer ersten Betriebsspannung (U1) für erste elektrische Verbraucher (7) aufweist,
**dadurch gekennzeichnet, dass** das Gehäuse (31) des Schaltnetzteils (30) zumindest einen zweiten Leistungsausgang (2) mit einer zweiten Betriebsspannung (U2) für zweite elektrische Verbraucher (8) aufweist, und die zweite Betriebsspannung (U2) am zweiten Leistungsausgang (2) größer ist als die erste Betriebsspannung (U1) an dem ersten Leistungsausgang (1).

2. Schaltnetzteil nach Anspruch 1 zur Leistungsversorgung von verteilt angeordneten Verbrauchern (7, 8) aus Sensoren (3, 13) und/oder Aktoren (4) in einer intralogistischen Anlage (9) zur Beförderung von Material und/oder Waren (6) auf einer Förderbahn (19), wobei zur elektrischen Leistungsversorgung elektrische Verbraucher (7) über elektrische Leitungen mit dem ersten Leistungsausgang (1) des Schaltnetzteils (30) verbunden sind, **dadurch gekennzeichnet, dass** erste elektrische Verbraucher (7) der Anlage (9) zur Leistungsversorgung mit dem ersten Leistungsausgang (1) mit der ersten Betriebsspannung (U1) verbunden sind, und dass zweite elektrische Verbraucher (2) der Anlage (9) zur Leistungsversorgung mit dem zweiten Leistungsausgang (2) mit der zweiten Betriebsspannung (U2) verbunden sind.

3. Schaltnetzteil nach Anspruch 1 oder 2,
**dadurch gekennzeichnet, dass** die zweite Betriebsspannung (U2) ein insbesondere ganzzahliges Vielfaches der ersten Betriebsspannung (U1) ist.

4. Schaltnetzteil nach einem der Ansprüche 1 bis 3,
**dadurch gekennzeichnet, dass** die erste Betriebsspannung (U1) einen Nennwert von 24 V und die zweite Betriebsspannung (U2) einen Nennwert von 48 V aufweist.

5. Schaltnetzteil nach einem der Ansprüche 1 bis 4,
**dadurch gekennzeichnet, dass** im Gehäuse (31) des Schaltnetzteils (30) ein Regelglied (41) angeordnet ist, und das Regelglied (41) ausgebildet ist, zumindest eine der Betriebsspannungen (U1, U2) eines Leistungsausgangs (1, 2) zu verändern.

6. Schaltnetzteil nach einem der Ansprüche 1 bis 5,
**dadurch gekennzeichnet, dass** im Gehäuse (31) des Schaltnetzteils (30) eine elektronische Sicherung (39, 49) aufgenommen ist, die ausgebildet ist, zumindest einen Leistungsausgang (1, 2) elektrisch abzusichern.

7. Schaltnetzteil nach Anspruch 6,
**dadurch gekennzeichnet, dass** der elektronischen Sicherung (39, 49) ein Grenzwert (Iₙ) eingegeben ist, und die elektronische Sicherung (39, 49) ausgebildet ist, bei Überschreiten des eingegebenen Grenzwertes (Iₙ) die auf dem überwachten Leistungsausgang (1, 2) ausgegebene elektrische Leistung abzusenken, insbesondere den Leistungsausgang (1, 2) abzuschalten.

8. Schaltnetzteil nach Anspruch 7,
**dadurch gekennzeichnet, dass** die elektronische Sicherung (39, 49) ausgebildet ist, nach einer einstellbaren Betriebscharakteristik zur Anpassung der elektrischen Leistung des Leistungsausgangs (1, 2) den fließenden Strom auf einen vorgegebenen Wert zu begrenzen, den Strom auf einen vorgegebenen Mittelwert über der Zeit einzustellen oder den Strom abzuschalten.

9. Schaltnetzteil nach einem der Ansprüche 1 bis 8,
**dadurch gekennzeichnet, dass** das Gehäuse (31) eine von außen ablesbare Anzeigevorrichtung (40) aufweist, die geeignet ist, den Zustand zumindest eines Leistungsausgangs (1, 2) anzuzeigen.

10. Schaltnetzteil nach einem der Ansprüche 1 bis 9,
**dadurch gekennzeichnet, dass** im Gehäuse (31) des Schaltnetzteils (30) ein Bremswiderstand (43, 44) angeordnet ist.

11. Schaltnetzteil nach einem der Ansprüche 1 bis 10,
**dadurch gekennzeichnet, dass** das Schaltnetzteil (30) ausgebildet ist, einen dem Schaltnetzteil (30) über einen der Leistungsausgänge (1, 2) zufließenden Strom (I) zur Leistungsversorgung eines anderen Leistungsausgangs (2, 1) des Schaltnetzteils (30) auf diesen aufzuschalten.

12. Schaltnetzteil nach einem der Ansprüche 1 bis 11,
**dadurch gekennzeichnet, dass** im Gehäuse (31) des Schaltnetzteils (30) eine Kommunikationseinheit (10) aufgenommen ist, und die Kommunikationseinheit (10) ausgebildet ist, Betriebsdaten zumindest eines Leistungsausgangs (1, 2) des Schaltnetzteils (30) wie Strom (I), Spannung (U), Leistung, Temperatur o. dgl. nach außen zu kommunizieren.

13. Schaltnetzteil nach Anspruch 12,
**dadurch gekennzeichnet, dass** die Kommunikationseinheit (10) ausgebildet ist, mit einer übergeordneten Steuereinheit (PLC) über eine Kommunikationsschnittstelle oder einen Kommunikationsbus (23) zu kommunizieren.

14. Schaltnetzteil nach Anspruch 12 oder 13,
**dadurch gekennzeichnet, dass** die Kommunikationseinheit (10) ausgebildet ist, Betriebsdaten des Schaltnetzteils (30) wie Strom (I), Spannung (U), Leistung oder dgl. zu verändern.

15. Schaltnetzteil nach einem der Ansprüche 12 bis 14,
**dadurch gekennzeichnet, dass** die Kommunikationseinheit (10) ausgebildet ist, als Slave und/oder als Master betrieben zu werden.
